(19) Europäisches Patentamt / European Patent Office / Office européen des brevets

(11) **EP 1 919 663 B1**

(12) **FASCICULE DE BREVET EUROPEEN**

(45) Date de publication et mention
de la délivrance du brevet:
**18.11.2009 Bulletin 2009/47**

(21) Numéro de dépôt: **06794218.5**

(22) Date de dépôt: **26.07.2006**

(51) Int Cl.:
***B24B 9/14*** *(2006.01)*      ***G02C 13/00*** *(2006.01)*

(86) Numéro de dépôt international:
**PCT/FR2006/001819**

(87) Numéro de publication internationale:
**WO 2007/026060 (08.03.2007 Gazette 2007/10)**

(54) **METHODE DE PILOTAGE DE PALPEUR POUR LECTURE DE DRAGEOIR DE MONTURE DE LUNETTES**

TASTFINGERSTEUERVERFAHREN ZUM ABLESEN DER EINFASSUNG EINES BRILLENGESTELLS

FOLLOWER PILOTING METHOD FOR READING THE BEZEL OF A SPECTACLE FRAME

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **31.08.2005 FR 0508897**

(43) Date de publication de la demande:
**14.05.2008 Bulletin 2008/20**

(73) Titulaire: **ESSILOR INTERNATIONAL
(Compagnie Générale d'Optique)
94220 Charenton le Pont (FR)**

(72) Inventeur: **JACQ, Francis
F-94227 Charenton (FR)**

(74) Mandataire: **Chauvin, Vincent et al
CORALIS
85 boulevard Malesherbes
75008 Paris (FR)**

(56) Documents cités:
**EP-A- 1 037 008      EP-A- 1 060 834
US-A1- 2002 166 247   US-B1- 6 325 700
US-B1- 6 473 977**

**Description**

DOMAINE TECHNIQUE AUQUEL SE RAPPORTE L'INVENTION

La présente invention concerne de manière générale le domaine de la lunetterie et plus précisément le palpage du drageoir d'une monture de lunettes cerclées.

Elle concerne plus particulièrement un procédé de lecture du contour du drageoir d'un cercle de monture de lunettes suivant le préambule de la revendication 1, comprenant les étapes de mise en contact d'un palpeur contre le drageoir et de palpage du drageoir par glissement ou roulement dudit palpeur le long du drageoir, le palpeur étant actionné par des moyens d'actionnement au moins selon un premier axe normal au plan général des cercles de la monture. Un example d'un tel procédé est décrit dans le document US-B1-6 325 700.

La méthode trouve une application particulièrement avantageuse par son application aux lunettes comportant des montures fortement cambrées, c'est-à-dire fortement galbées.

ARRIERE-PLAN TECHNOLOGIQUE

La partie technique du métier de l'opticien consiste à monter une paire de lentilles ophtalmiques sur une monture sélectionnée par un porteur. Ce montage se décompose en cinq opérations principales :

- la lecture du contour des drageoirs des cercles de la monture sélectionnée par le porteur, c'est-à-dire du contour des rainures qui parcourent l'intérieur de chaque cercle de la monture,
- le centrage de chaque lentille qui consiste à déterminer la position qu'occupera chaque lentille sur la monture afin d'être convenablement centrée en regard de l'oeil du porteur,
- le palpage de chaque lentille qui consiste à déterminer les coordonnées des points caractérisant la géométrie du contour des lentilles, puis,
- le détourage de chaque lentille qui consiste à usiner ou à découper son contour à la forme souhaitée, compte tenu des paramètres de centrage définis, et enfin,
- le biseautage qui consiste à réaliser un biseau destiné à maintenir la lentille dans le drageoir que comporte la monture.

Dans le cadre de la présente invention, on s'intéresse à la première opération de lecture du contour des drageoirs des cercles de la monture. Il s'agit concrètement, pour l'opticien, de palper le contour intérieur des cercles de la monture des lunettes sélectionnées afin de déterminer précisément les coordonnées de points caractérisant le contour du fond du drageoir. La connaissance de ce contour permet à l'opticien de déduire la forme que devront présenter les lentilles, une fois détourées et biseautées, afin de pouvoir être montées sur cette monture.

L'objectif de cette opération est en particulier de suivre très exactement le fond du drageoir que comporte le cercle à lire de manière à pouvoir mémoriser une image numérique précise de la géométrie du drageoir.

Dans le cas des montures fortement « galbées » et « versées », c'est-à-dire fortement cambrées et vrillées, un appui simple du palpeur sur le drageoir, orthogonalement à son axe de rotation, ne permet pas au palpeur de suivre précisément le fond du drageoir en forme de dièdre. En particulier, lorsque le « versage » (ou vrillage) de la monture est très important et qu'une des surfaces latérales du drageoir est très inclinée, le palpeur risque de sortir du drageoir en glissant le long de cette surface latérale.

Le document US 6325700 présente par exemple un dispositif de suivi de drageoir prévu pour pallier ce problème de sortie du drageoir. Ce dispositif comprend un appareil de lecture de contour, dans lequel est disposée une monture, pilotant en position le palpeur en fonction de la courbure de la trajectoire du palpeur.

L'inconvénient d'un tel dispositif est que dans certaines parties du cercle de la monture, en particulier dans les parties temporales, la courbure de la trajectoire du palpeur suivant le premier axe (normal au plan général des cercles de la monture) n'est pas importante contrairement au versage de la monture. Il en résulte que, dans ces parties du cercle, le pilotage en position du palpeur ne réagit pas efficacement au versage de la monture.

On connaît par ailleurs du document US 6 325 700 un appareil et un procédé de lecture de contour du drageoir d'un cercle d'une monture de lunettes. Ce procédé comporte une étape de mise en contact du palpeur de l'appareil contre le drageoir de la monture et une étape de palpage de ce drageoir.

Dans ce document, il est exposé qu'au cours de l'étape de palpage, les moteurs d'actionnement du palpeur sont pilotés en position pour faire varier la position du palpeur en fonction de la courbure du drageoir de la monture de manière à améliorer le suivi du drageoir par le palpeur.

Toutefois, dans les zones temporales des cercles de la monture, la courbure du drageoir reste généralement constante alors que le versage du drageoir évolue. L'inconvénient de ce procédé de pilotage du drageoir est donc qu'il ne permet donc pas de prendre en compte la variation effective du versage, au risque que le palpeur sorte du drageoir dans les zones temporales des cercles de la monture.

OBJET DE L'INVENTION

Afin de remédier aux inconvénients précités de l'état de la technique, la présente invention propose un procédé de lecture de contour de drageoir simple permettant une lecture précise du fond du drageoir.

Plus particulièrement, on propose selon l'invention un procédé de lecture de contour de drageoir selon la revendication 1.

Ainsi, grâce à l'invention, à partir d'un échantillon de montures types, on peut définir des positions du palpeur selon le premier axe caractéristiques des montures de lunettes à partir desquelles il est nécessaire de faire varier les efforts que doit exercer le palpeur sur le drageoir de la monture palpée. Ces valeurs sont donc définies et restent les mêmes quelque soit la monture disposée dans l'appareil de lecture de contour, qu'elle soit très cambrée ou non. Par ailleurs, le pilotage du palpeur est effectué en effort et non en position. Les réglages de l'appareil sont donc rapides et aisés à effectuer.

De plus, les moyens d'actionnement sont aptes à exercer un effort qui permet de forcer le palpeur à rester au fond du drageoir. En effet, le composante transversale de l'effort global est une composante classique qui permet, lorsque le drageoir en forme de dièdre n'est pas « versé », au palpeur de glisser sur l'une ou l'autre des surfaces latérales du dièdre du drageoir vers le fond du drageoir et d'y rester. La composante axiale de l'effort permet quant à elle au moins d'annuler le poids du palpeur lorsque ce dernier est vertical. Elle permet aussi de « pousser » le palpeur en direction du fond du drageoir quand le drageoir est fortement « versé » et qu'une des surfaces latérales du dièdre est trop incliné pour qu'un effort transversal, seul, permette au palpeur de glisser au fond du drageoir.

D'autres caractéristiques avantageuses de l'invention sont définies dans les revendications 2 à 7.

Ainsi, il est possible de faire varier indépendamment les deux composantes de l'effort global de telle manière que ce dernier présente une valeur et une direction optimale en fonction du « versage » et de la cambrure de la monture.

Par ailleurs, lorsque le palpeur détecte une cambrure importante de la monture et par conséquent un « versage » important de cette dernière, les moyens d'actionnement appliquent un effort global présentant une direction plus proche de celle du premier axe. Ainsi, l'axe selon lequel l'effort global est appliqué et l'axe de symétrie du dièdre formé par le drageoir au point mesuré conservent des directions presque parallèles quelque soit le point palpé sur la monture et quelque que soit la cambrure de cette dernière.

Lorsqu'en particulier l'effort global varie par palier en fonction de la position du palpeur selon l'axe de rotation, il est possible de faire varier les deux composantes axiale et transversale de l'effort continûment en fonction de la position angulaire du palpeur. Ce lissage de l'effort global permet alors de faire varier l'effort global avec un meilleur suivi du « versage » de la monture.

Lorsque pour des raisons de confort pour l'opticien, l'axe de rotation du palpeur n'est pas conçu verticalement, il est nécessaire de tenir compte de la dissymétrie massique du palpeur dans le calcul de la composante transversale de l'effort global à appliquer sur la monture. En effet, quelque soit la position de la monture et donc dudit axe de rotation, l'effort ressenti par la monture doit être équivalent à l'effort qu'elle ressentirait si l'axe de rotation du palpeur était vertical.

DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :

- la figure 1 est une vue en perspective d'un appareil de lecture de contour recevant une monture de lunettes dont la forme des cercles est destinée à être relevée par un palpeur ;
- les figures 2 et 3 sont des vues en perspective du dessous du plateau tournant extrait de l'appareil de la figure 1, ces figures 2 et 3 permettant de voir selon deux angles différents le sous-ensemble de lecture porté par le plateau tournant ;
- la figure 4 est une vue en coupe des cercles dont la forme est relevée par le palpeur ;
- la figure 5 est une vue de dessus de la monture de lunettes permettant de voir la cambrure de chacun des cercles ; et
- les figures 6A et 6B sont des vues en coupe du drageoir d'un cercle en deux points du contour.

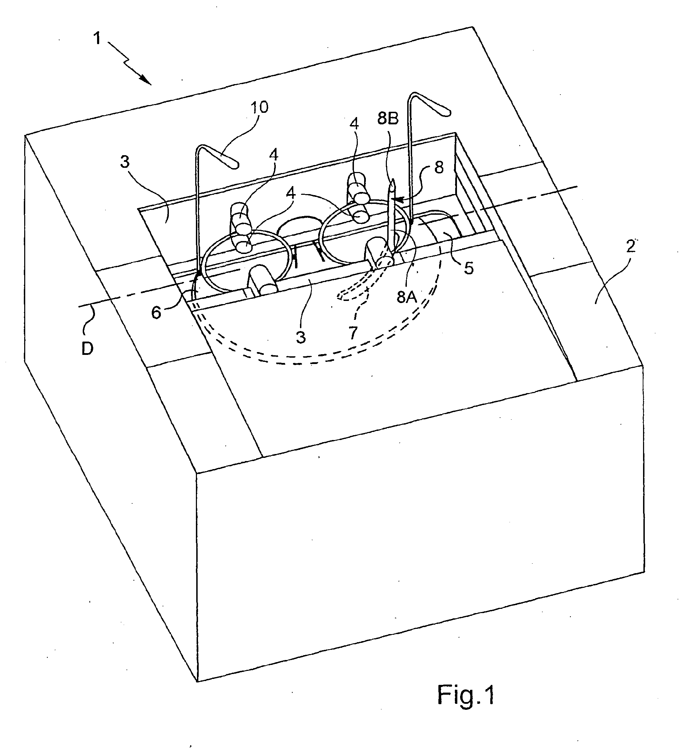

La figure 1 est une vue générale d'un appareil de lecture de contour 1 tel qu'il se présente à son utilisateur. Cet appareil comporte un capot supérieur 2 recouvrant l'ensemble de l'appareil à l'exception d'une portion supérieure centrale.

L'appareil de lecture de contour 1 comporte également un jeu de deux mâchoires 3 dont au moins une des mâchoires 3 est mobile par rapport à l'autre de sorte que les mâchoires 3 puissent être rapprochées ou écartées l'une de l'autre pour former un dispositif de serrage. Chacune des mâchoires 3 est de plus munie de deux pinces formées chacune de deux plots 4 mobiles pour être adaptés à serrer entre eux une monture 10 de lunettes. La monture 10 peut alors être maintenue immobile sur l'appareil de lecture de contour 1.

Dans l'espace laissé visible par l'ouverture supérieure centrale du capot 2, un châssis 5 est visible. Une platine (non visible) peut se déplacer en translation sur ce châssis 5 selon un axe de transfert D. Sur cette platine est monté tournant un plateau tournant 6. Ce plateau tournant 6 est donc apte à prendre deux positions sur l'axe de transfert D, une première position dans laquelle le centre du plateau tournant 6 est disposé entre les deux paires de plots 4 fixant le cercle correspondant à l'oeil droit de la monture 10, et une seconde position dans laquelle le centre du plateau tournant 6 est disposé entre les deux paires de plots 4 fixant le cercle correspondant à l'oeil gauche de la monture 10. Le plateau tournant 6 possède un axe de rotation B défini comme l'axe normal à la face avant de ce plateau tournant 6 et passant par son centre. Le plateau tournant 6 comporte par ailleurs une lumière 7 oblongue en forme d'arc de cercle à travers laquelle saille un palpeur 8 comportant une tige support 8A et, à son extrémité, un doigt de palpage 8B destiné à suivre par contact le contour de la monture 10 palpée.

Le plateau tournant 6 est guidé en rotation autour d'un premier axe, son axe de rotation B, par trois galets de guidage (non représentés) disposés régulièrement le long de sa périphérie et maintenus sur la platine de l'appareil de lecture de contour 1. Alternativement, ces galets sont commandés par un moteur-codeur (non représenté) permettant une rotation pilotée du plateau tournant 6 et un relevé à tout instant de sa position angulaire dont dépend la position angulaire T du palpeur 8.

On constate que, dans cet exemple, la lumière 7 en arc de cercle présente une longueur correspondant approximativement au rayon du plateau tournant 6 et s'étend entre le centre du plateau tournant 6 et sa périphérie. L'arc de cercle décrit par la lumière 7 est centré autour d'un axe porteur A.

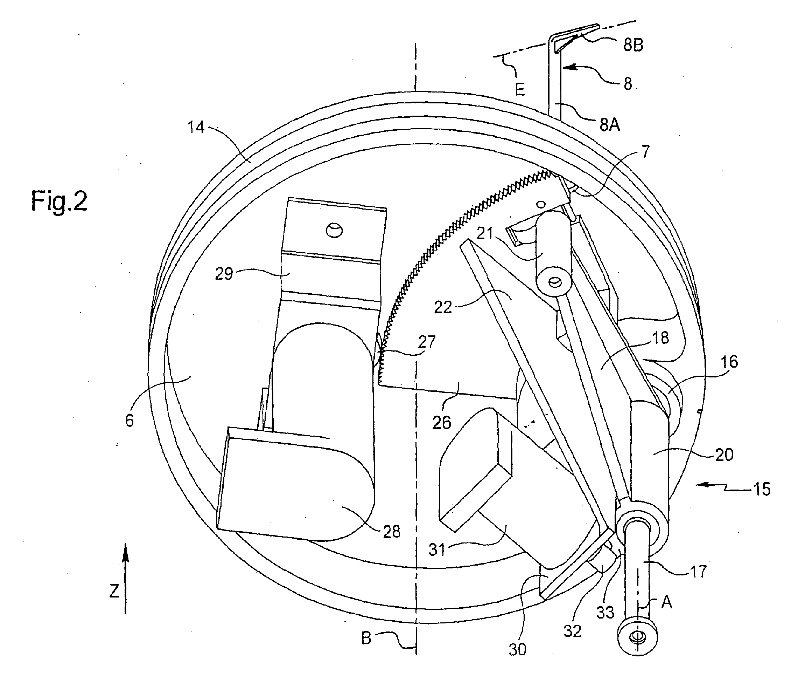

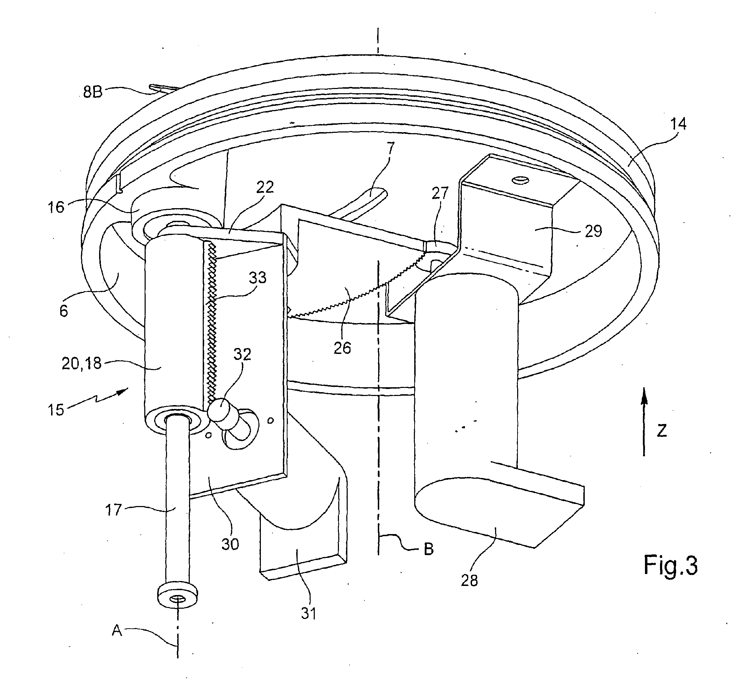

Après démontage de l'appareil 1, le plateau tournant 6 peut être extrait du châssis 5. Il se présente alors tel que représenté sur les figures 2 et 3. La vue en perspective de la figure 2 fait apparaître une rainure 14 disposée sur la tranche du plateau tournant 6, sur toute sa circonférence. Cette rainure 14 coopère avec les galets de guidage de la platine. Le plateau tournant 6 porte un sous-ensemble de lecture 15. Les figures 2 et 3 permettent de voir le sous-ensemble de lecture 15 selon deux angles de vue différents. Le sous-ensemble de lecture 15 comporte un palier 16 sur lequel est monté un arbre porteur 17 monté en rotation sur le plateau tournant 6. Cet arbre porteur 17 possède comme axe l'axe porteur A.

En référence à la figure 2, un bras porteur 18 est monté sur l'arbre porteur 17. Le bras porteur 18 comporte à l'une de ses extrémités une bague 20 permettant au bras porteur 18 un mouvement de rotation autour de l'axe poteur A ainsi qu'un mouvement de translation le long de cet axe. À son extrémité opposée à la bague 20, le bras porteur 18 comporte un support cylindrique 21 sur lequel est fixée la tige support 8A du palpeur 8 de manière à ce que l'axe de cette tige support 8A reste parallèle à l'axe porteur A.

Ce montage permet au palpeur 8 de présenter un mouvement en arc de cercle le long de la lumière 7, dans un plan orthogonal à l'axe de rotation B du plateau tournant 6, cet axe de rotation B étant ici parallèle à l'axe A. De plus, le palpeur 8 peut effectuer un mouvement d'entrée/sortie par rapport à la face avant du plateau tournant 6, lorsque le bras porteur 18 coulisse le long de l'axe A.

Le sous-ensemble de lecture 15 comporte également un bras de guidage 22 rattaché à la base de l'arbre 17. Ce bras de guidage 22 a une longueur suffisante pour atteindre la lumière 7. Le bras de guidage 22 comporte une portion semi-circulaire dentée 26 centrée sur l'axe porteur A. Les dents de la portion semi-circulaire 26 engrènent avec un pignon intermédiaire 27 qui engrène lui-même avec le pignon (non visible) d'un moteur-codeur 28 monté sur une chape 29 qui est fixée sur le plateau tournant 6. Les dents du pignon intermédiaire 27 n'ont pas été représentées pour rendre les dessins plus clairs. Le bras de guidage 22 comporte une chape verticale 30, disposée parallèlement à l'axe porteur A, sur laquelle est fixé un moteur-codeur 31 dont le pignon 32 engrène avec une crémaillère 33 fixée sur la bague 20 du bras porteur 18. La crémaillère 33 est disposée parallèlement à l'axe porteur A. Les dents du pignon 32 n'ont pas été représentées pour les mêmes raisons de clarté que précédemment.

Le moteur-codeur 28 est donc apte à faire pivoter le palpeur 8 autour de l'axe porteur A. Il permet par conséquent d'exercer un effort transversal Ft sur le palpeur 8 selon un axe d'effort E. Cet axe d'effort E est défini comme étant l'axe passant par l'axe de la tige support 8A et tangent à l'arc de cercle décrit par la lumière 7.

Le moteur-codeur 31 est quant à lui apte à translater le palpeur selon un axe parallèle à l'axe porteur A. Il permet par conséquent d'exercer un couple dit de compensation de masse Cz induisant un effort axial Fa sur le palpeur 8 selon un axe parallèle à l'axe porteur A.

Ces deux efforts axial Fa et transversal Ft permettent de créer un effort global F sur le palpeur. L'effort axial Fa correspond donc à la composante axiale de l'effort global F et l'effort transversal Ft correspond à la composante transversale de l'effort global F.

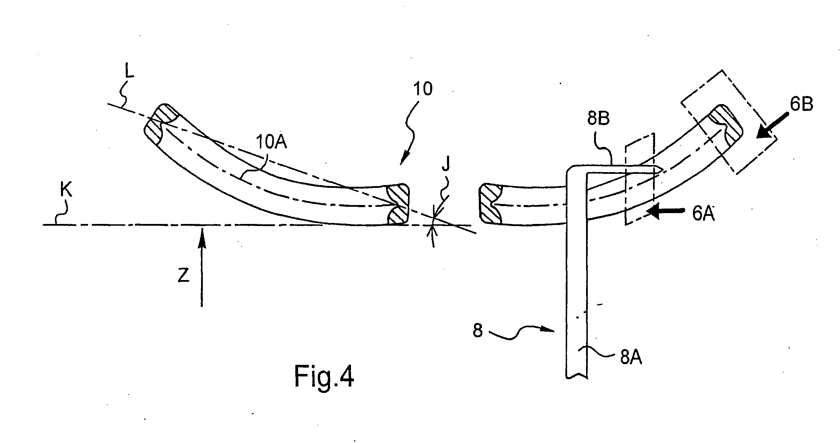

La figure 4 représente l'extrémité supérieure du palpeur 8 comportant le doigt de palpage 8B. Ce doigt de palpage 8B pointe selon un axe perpendiculaire à l'axe de la tige support 8A. Il présente une extrémité pointue destinée à s'insérer dans le drageoir 10A de la monture 10 pour relever la géométrie de son contour.

Lorsqu'une monture 10 est disposée dans l'appareil de lecture de contour 1, on peut définir chaque point de la monture 10 par trois coordonnées spatiales. L'origine du repère correspondant au centre de la face avant du plateau tournant 6, on peut se placer dans un repère cylindrique orthonormal dont le troisième axe correspond à l'axe de rotation B du plateau tournant 6 et définit une altitude Z du point palpé. Un point de la monture est donc repéré par son rayon, sa position angulaire T et son altitude Z.

L'appareil de lecture de contour 1 comporte par ailleurs un dispositif électronique et/ou informatique permettant, d'une part, de piloter les moteurs-codeurs 28,31, et, d'autre part, de récupérer et d'enregistrer les données que lui transmettent ces moteurs-codeurs 28,31.

Dans notre cas d'étude, on s'intéresse tout particulièrement aux montures fortement galbées, c'est-à-dire fortement cambrées par rapport au plan général des cercles de la monture 10. Un exemple d'une telle monture est représenté sur la figure 4.

Le galbe (ou la cambrure) d'une monture peut être quantifié à l'aide d'un angle de gabe J. Cet angle de galbe J correspond à l'angle formé entre le plan général K des cercles de la monture 10 (plan vertical passant par le pontet nasal reliant les deux cercles de la monture) et l'axe L défini comme étant l'axe passant par deux points distincts du drageoir 10A (typiquement, l'un disposé près de la partie nasale du cercle et l'autre près de la partie temporale du cercle) et présentant la plus grande inclinaison par rapport au plan général K des cercles de la monture 10.

On entend ici par fortement galbée une monture dont l'angle de galbe J est supérieur à 20 degrés.

Ce type de montures 10 fortement galbées présente généralement aussi un vrillage du drageoir 10A communément appelé « versage ».

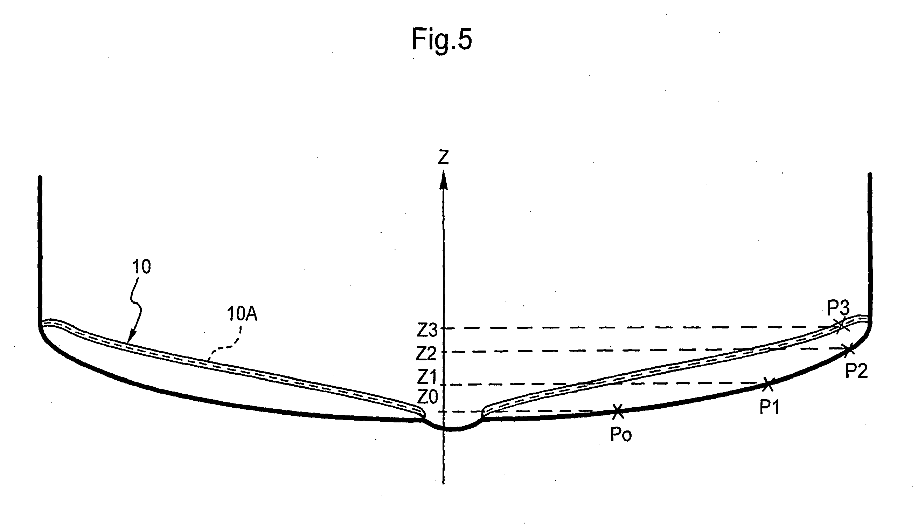

Ainsi, comme le montre la figure 5, on peut distinguer sur chaque cercle d'une monture 10 quatre zones distinctes.

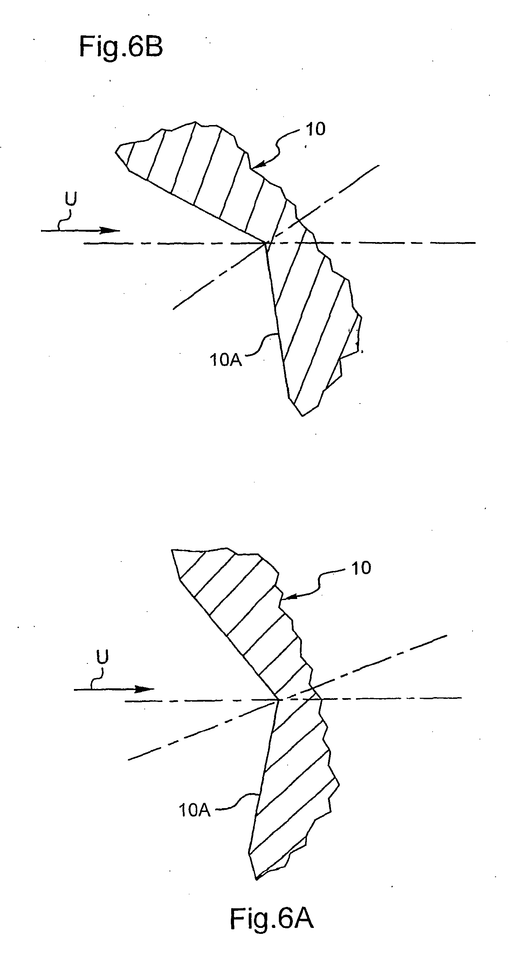

- On distingue tout d'abord une première zone située à proximité du nez du porteur, entre P0 et P1. Cette première zone est peu cambrée et peu «versée».
- On distingue également une deuxième zone située sur la partie basse de la monture, entre P1 et P2. Le long de cette zone, la cambrure et le «versage» de la monture 10 augmentent rapidement. Toujours dans cette zone, comme le montre la figure 6A, le «versage» du drageoir est qualifié de favorable. Ainsi, le profil du drageoir est tel que, si un effort important est appliqué par le doigt de palpage 8B sur le drageoir selon la direction U, correspondant dans l'appareil de lecture de contour 1 à l'axe d'effort E, alors le doigt de palpage 8B se positionne au fond du drageoir.
- On distingue une troisième zone, entre P2 et P3. Le long de cette zone, la cambrure et le «versage» de la monture atteignent leur valeur maximum. Dans cette zone, comme le montre la figure 6B, le «versage» du drageoir est qualifié de défavorable. En effet, le profil du drageoir est tel que, si un effort important est appliqué par le doigt de palpage 8B sur le drageoir 10A selon la direction U, correspondant dans l'appareil de lecture de contour 1 à l'axe d'effort E, alors le doigt de palpage 8B sort du drageoir.
- On distingue enfin une quatrième zone, entre P3 et P0. Le long de cette zone, le «versage» et la cambrure du drageoir 10A décroissent. En outre, sur cette quatrième zone, le «versage» est favorable.

On notera que chacun des points P0, P1, P2, P3 possède une position selon un axe Z notée respectivement Z0, Z1, Z2, Z3. Ces positions des points selon l'axe Z sont ici appelées altitude. On notera en outre que lorsque la monture 10 est installée d'ans l'appareil de lecture de contour 1, l'axe Z est parallèle à l'axe de rotation B.

Préalablement au démarrage du palpage, la monture 10 des lunettes est insérée entre les plots 4 des mâchoires 3 de sorte que chacun des cercles de la monture 10 soit prêt à être palpé selon un trajet démarrant par l'insertion du palpeur entre deux plots 4 correspondant à la partie inférieure de la monture 10, puis suivant le drageoir 10A de la monture 10, afin de couvrir toute la circonférence du cercle de la monture 10. A la suite de cette insertion, le dispositif électronique et/ou informatique étalonne le couple de compensation de masse Cz de sorte que le palpeur 8 soit à l'équilibre quelque soit son altitude Z.

En fonctionnement, le palpeur 8 est tout d'abord inséré dans le cercle correspondant à l'oeil droit du porteur. Pour cela, la platine sur laquelle est monté le plateau tournant 6 se déplace à l'aide d'un moteur et d'une liaison crémaillère (non représentés) de telle sorte que le centre du plateau tournant 6 soit disposé entre les deux paires de plots 4 des deux mâchoires 3 fixant le cercle de la monture correspondant à l'oeil droit du porteur.

Le doigt de palpage 8B se place alors automatiquement à une altitude Z0. Cette altitude Z0 est connue et correspond à l'altitude du point situé à mi-hauteur entre deux plots 4 de fixation de la monture 10. Afin de placer le doigt de palpage 8B à cette altitude Z0, le sous-ensemble de lecture 15 dispose d'un mécanisme embarqué permettant le mouvement du palpeur 8 parallèlement à l'axe A. Ce mécanisme comporte le moteur-codeur 31 qui est adapté à disposer la bague 20, et par conséquent le bras porteur 18, à la hauteur désirée sur l'arbre 17. Le palpeur 8 peut ainsi présenter un mouvement selon l'axe Z.

Le doigt de palpage 8B se déplace alors dans le plan de fixation des montures 10 en direction du point P0 correspondant au point situé entre les deux plots 4 de fixation de la monture 10 sur sa partie basse. Pour cela, un mouvement conjoint de rotation autour de l'axe A est permis au bras de guidage 22 et au bras porteur 18, ce qui permet au bras de guidage 22, entraîné par le moteur 28, d'entraîner lui-même le palpeur 8 en rotation autour de l'axe A, le long de la lumière 7.

Dans cette position initiale, lorsque le doigt de palpage 8B est disposé au point P0, le plateau tournant 6 définit une position angulaire T nulle. Les galets de guidage du plateau tournant 6 sont alors en mesure de faire pivoter le sous-ensemble de lecture 15 par rapport au châssis fixe 5, le sous-ensemble de lecture 15 étant embarqué sur le plateau tournant 6. Le moteur-codeur (non représenté) qui entraîne les galets insérés dans la rainure 14 non seulement provoque la rotation du plateau tournant 6 mais permet aussi au dispositif électronique et/ou informatique de connaître la valeur de la position angulaire T que présente le palpeur 8 par rapport à sa position initiale.

Lorsque le plateau tournant 6 commence à pivoter, la valeur de la position angulaire T du palpeur 8 croît. Le palpeur 8 se déplace le long du fond du drageoir et est guidé en rayon et en altitude Z par ce drageoir 10A. Le palpeur étant inséré dans le cercle de la monture 10 correspondant à l'oeil droit du porteur, le palpeur 8 se déplace dans le sens trigonométrique.

La conservation du contact du doigt de palpage 8B avec le drageoir 10A est assurée par les moteurs-codeurs 28,31. Ces derniers exercent en effet un effort global sur le palpeur 8 qui permet au doigt de palpage 8B de rester en contact du fond du drageoir 10A. L'effort global minimal exercé correspond à un effort transversal Ft permettant de maintenir le palpeur contre le drageoir 10A et à un effort axial Fa permettant de contrer le poids du palpeur 8 et du bras porteur 18.

Pendant la rotation du plateau tournant 6, le moteur-codeur 31 est donc actif mais il agit aussi en tant que codeur pour repérer les positions successives du bras porteur 18 le long de l'axe A. Ces positions permettent au dispositif électronique et/ou informatique de connaître à tout instant les coordonnées radiales et angulaires du doigt de palpage 8B par rapport au plateau 6. Connaissant les coordonnées du centre du plateau tournant 6 par rapport au châssis 5, le dispositif électronique et/ou informatique peut alors déterminer les coordonnées radiales et angulaires du doigt de palpage 8B, dans un repère fixe attaché au châssis 5.

De la même manière, le moteur-codeur 31 exerce lui aussi un couple dit de compensation de masse Cz destiné à au moins annuler artificiellement le poids de l'ensemble formé par le bras porteur 18 et le palpeur 8. Ce couple de compensation de masse Cz peut prendre une valeur plus importante permettant au doigt de palpage 8B de suivre plus facilement le contour à palper lorsque la monture 10 est fortement cambrée. Le moteur-codeur 31 fonctionne par ailleurs simultanément en codeur ce qui permet au dispositif électronique et/ou informatique de connaître l'altitude Z du doigt de palpage 8B du palpeur 8.

Ainsi, l'ensemble des moteurs-codeurs permet au dispositif électronique et/ou informatique de déterminer les coordonnées spatiales du point palpé par le palpeur 8 et par conséquent les coordonnées spatiales d'un ensemble de points caractérisant le contour du fond du drageoir lorsque le palpeur 8 a palpé avec précision le fond du drageoir 10A.

Afin d'acquérir cette précision dans le suivi du fond du drageoir, il est nécessaire que les moteurs-codeurs 28,31 exercent des couples d'effort aidant le doigt de palpage 8B à rester au fond de ce drageoir 10A.

Pour cela, tant que le moteur-codeur 31 mesure une altitude du drageoir comprise entre Z0 et Z1, le moteur codeur 31 applique un couple de compensation de masse Cz0 et le moteur-codeur 28 applique un couple créant un effort transversal Ft0 sur le palpeur 8. Le couple de compensation de masse Cz0 se traduit par un effort axial Fa permettant de contrer la masse du palpeur 8 et du bras porteur 18. L'effort transversal Ft0 entraîne quant à lui un effort du palpeur 8 sur le drageoir 10A selon l'axe d'effort E permettant au palpeur de suivre le fond du drageoir lorsque ce dernier est peu « versé ».

Le dispositif électronique et/ou informatique est programmé pour que, la valeur de la position angulaire T du palpeur 8 augmentant, si le moteur-codeur 31 mesure une altitude du doigt de palpage 8B supérieure à Z1 (au point P1), alors, le moteur codeur 31 applique un couple de compensation de masse de valeur Cz1 supérieure à la valeur Cz0 et pour que le moteur-codeur 28 applique un couple induisant un effort transversal de valeur Ft1 supérieure à celle de l'effort transversal Ft0. En effet, entre P1 et P2, le «versage» du drageoir est important. L'effort global appliqué par le doigt de palpage 8B sur le drageoir 10A doit donc présenter une valeur plus importante afin de vaincre les frottements du palpeur 8 sur le drageoir 10A qui empêchent le doigt de palpage 8B de venir au fond du drageoir 10A de la monture 10.

La position angulaire T continuant à augmenter, si le moteur-codeur 31 mesure une altitude de drageoir inférieure à Z1, le couple de compensation de masse reprend la valeur Cz0 et l'effort transversal reprend sa valeur Ft0.

En revanche, si le moteur-codeur 31 mesure une altitude de drageoir supérieure à Z2 (au point P2), alors, le moteur codeur 31 applique un couple de compensation de masse Cz2 supérieur au couple de compensation de masse Cz1 et le moteur-codeur 28 applique un couple entraînant un effort transversal Ft2 inférieur à l'effort transversal Ft1. En effet, le «versage» du drageoir 10A étant défavorable, l'effort global ne doit pas présenter une direction orthogonale à l'axe de rotation B du palpeur 8, sinon, ce dernier sort du drageoir 10A. L'effort axial Fa créé par le couple de compensation de masse Cz est donc augmenté de sorte que l'effort global présente une direction qui permette au palpeur 8 de rester au fond du drageoir 10A.

Suite à cette étape, si le moteur-codeur 31 mesure une altitude de drageoir inférieure à Z2, le couple de compensation de masse reprend la valeur Cz1 et l'effort transversal reprend sa valeur Ft1, puis lorsqu'il mesure une altitude inférieure à Z1, le couple de compensation de masse reprend la valeur Cz0 et l'effort transversal reprend sa valeur Ft0.

En revanche, s'il mesure une altitude Z3 (au point P3), alors le couple de compensation de masse reprend directement sa valeur initiale Cz0 et l'effort transversal sa valeur initiale Ft0.

Des exemples de valeurs applicables à la méthode pour le palpage du drageoir 10A d'un cercle correspondant à l'oeil droit du porteur sont regroupés dans le tableau de valeurs suivant :

| Z : | Z0=12mm | Z1=16mm | Z2=28mm |
|---|---|---|---|
| Cz: | Cz0=6mN/m | Cz1=9mN/m | Cz2=10mN/m |
| Ft : | Ft0=60g | Ft1=65g | Ft2=45g |

On notera qu'en variante, il est possible de programmer le dispositif électronique et/ou informatique de manière à ce que dans chaque domaine d'altitude, par exemple entre P2 et P3, l'effort global ne soit pas constant mais plutôt fonction de la position angulaire T du palpeur 8. Il faut pour cela programmer le dispositif électronique et/ou informatique afin qu'il puisse faire varier les couples des moteurs-codeurs 28,31 de manière continue.

Lorsque la valeur de la position angulaire T du palpeur 8 atteint 360 degrés, alors les galets de guidage du plateau tournant 6 s'arrêtent. Le drageoir 10A du cercle correspondant à l'oeil droit du porteur présente alors un contour de forme connue.

Afin de palper le second cercle de la monture, le palpeur 8 descend selon l'axe Z sous la monture 10. La platine se déplace alors transversalement selon l'axe de transfert D afin d'atteindre sa deuxième position dans laquelle le centre du plateau tournant 6 est positionné entre les plots 4 des deux pinces 3 enserrant le cercle correspondant à l'oeil gauche du porteur.

Le palpeur 8 est alors placé automatiquement à la hauteur Z0 à l'intérieur du second cercle de la monture 10 à mesurer, contre le drageoir de ce second cercle, entre les deux plots 4 de fixation de la partie basse de ce cercle de la monture 10.

Le palpage du drageoir est alors réalisé de la même manière que précédemment mais dans le sens trigonométrique inverse.

La présente invention n'est nullement limitée au mode de réalisation décrit et représenté, mais l'homme du métier saura y apporter toute variante conforme à son esprit.

Par exemple, selon une variante de réalisation dans laquelle la platine et par conséquent le palpeur 8 sont inclinés, le calcul de l'effort de palpage est réalisé différemment.

Ainsi, il est nécessaire de tenir compte du poids du palpeur 8 et du bras porteur 18 dans le calcul des efforts à fournir au palpeur 8. En effet, l'effort transversal doit être calculé en fonction de la position angulaire T du palpeur 8 en temps réel. L'effort transversal est donc programmé pour varier selon la formule suivante :

$$Ft = Ft_i - K \cdot \cos(T),$$

avec K qui est une constante positive dépendant du degré d'inclinaison de la platine et $Ft_i$ qui correspond aux valeurs de l'effort transversal Ft dans chaque zone de la monture 10. On peut par exemple prendre pour K la valeur de 15 grammes lorsque la platine est inclinée de 45 degrés.

Il convient par ailleurs de tenir compte de cet angle d'inclinaison de la platine dans le calcul des valeurs des couples de compensation de masse Cz dans chaque zone de la monture 10.

Selon une autre variante de réalisation, les valeurs du couple de compensation de masse Cz et de force transversale Ft peuvent varier non plus en fonction de l'altitude mesurée mais en fonction de la position angulaire T du palpeur 8.

Ainsi, selon la même méthode que précédemment, l'opticien fixe la monture 10 dans l'appareil de lecture de contour 1. Il indique au dispositif électronique et/ou informatique si la monture 10 est fortement cambrée ou non. Si ce n'est pas le cas, l'appareil 1 effectue une lecture de chaque cercle à lire avec un couple de compensation de masse Cz et une force transversale Ft constants. En revanche, si c'est le cas, leurs valeurs ne restent pas constantes. En effet, le dispositif électronique et/ou informatique est alors programmé pour que :

- lorsque T est compris entre 0 degrés et 45 degrés, les moteurs-codeurs 28,31 appliquent un couple de compensation de masse Cz de 6 mN/m et un effort transversal Ft de 60 g ;
- lorsque T est compris entre 45 degrés et 80 degrés, les moteurs-codeurs 28,31 appliquent un couple de compensation de masse Cz de 9 mN/m et un effort transversal Ft de 65 g ;
- lorsque T est compris entre 80 degrés et 100 degrés, les moteurs-codeurs 28,31 appliquent un couple de compensation de masse Cz de 10 mN/m et un effort transversal Ft de 65 g ;

- lorsque T est compris entre 100 degrés et 120 degrés, les moteurs-codeurs 28,31 appliquent un couple de compensation de masse Cz de 9 mN/m et un effort transversal Ft de 65 g ;
- et lorsque T est compris entre 120 degrés et 360 degrés, les moteurs-codeurs 28,31 appliquent un couple de compensation de masse Cz de 6 mN/m et un effort transversal Ft de 60 g.

Chacun de ces intervalles correspondant à une zone de la monture 10 plus ou moins cambrée et «versée», le doigt de palpage 8B reste au fond du drageoir 10A ce qui permet une lecture précise des drageoirs de la monture10.

## Revendications

1. Procédé de lecture du contour du drageoir (10A) d'un cercle de monture (10) de lunettes comprenant les étapes de mise en contact d'un palpeur (8) contre le drageoir (10A) et de palpage du drageoir (10A) par glissement ou roulement dudit palpeur (8) le long du drageoir (10A), le palpeur (8) étant actionné par des moyens d'actionnement (28,31) au moins selon un premier axe (B) normal au plan général des cercles de la monture, **caractérisé en ce qu'**on fait varier, en cours de lecture, continûment ou par palier, l'effort global (F) fourni par les moyens d'actionnement (28,31) en fonction de la position (Z) du palpeur (8) selon le premier axe (B), **en ce que**, l'effort global (F) fourni par les moyens d'actionnement (28,31) comportant une composante axiale (Fa) parallèle au premier axe (B) et une composante transversale (Ft) orthogonale au premier axe (B), l'une et/ou l'autre desdites composantes (Fa,Ft) varie en fonction de la position (Z) du palpeur (8) selon le premier axe (B) de telle sorte que la composante axiale (Fa) de l'effort global (F) soit dirigée vers un côté intérieur de la monture (10) destiné à être positionné en vis-à-vis des yeux du porteur.

2. Procédé de lecture de contour selon la revendication précédente, dans lequel, les moyens d'actionnement (28,31) présentant un axe de rotation (B) autour duquel le palpeur (8) tourne pour son glissement le long du contour complet du cercle, cet axe de rotation (B) du palpeur (8) est confondu avec le premier axe (B).

3. Procédé de lecture de contour selon l'une des revendications précédentes, dans lequel la composante axiale (Fa) et la composante transversale (Ft) de l'effort global (F) varient l'une et l'autre continûment ou par palier de telle sorte que leur résultante varie en direction.

4. Procédé de lecture de contour selon l'une des revendications précédentes, dans lequel la valeur de la position (Z) du palpeur (8) sur le premier axe (B) augmentant lorsque le palpeur (8) se dirige vers le côté intérieur de la monture (10), la valeur de la composante axiale (Fa) de l'effort global (F) croît, continûment ou par palier, lorsque la valeur de la position (Z) du palpeur (8) augmente.

5. Procédé de lecture de contour selon l'une des revendications précédentes, dans lequel, le palpeur (8) présentant une position angulaire (T) autour de l'axe de rotation (B), l'effort global (F) varie continûment ou par palier en fonction de la position angulaire (T) du palpeur (8).

6. Procédé de lecture de contour selon la revendication précédente, dans lequel l'une et/ou l'autre des deux composantes axiale (Fa) et transversale (Ft) de l'effort global (F) varient continûment ou par palier en fonction de la position angulaire (T) du palpeur (8).

7. Procédé de lecture de contour selon l'une des revendications 5 et 6, dans lequel, ledit axe de rotation (B) n'étant pas vertical, la composante transversale (Ft) de l'effort global (F) varie continûment ou par palier en fonction de la position angulaire (T) du palpeur (8).

## Claims

1. A method of reading the outline of the bezel (10A) of a rim of an eyeglass frame (10), the method comprising the steps of putting a feeler (8) into contact against the bezel (10A) and of feeling the bezel (10A) by sliding or running said feeler (8) along the bezel (10A), the feeler (8) being actuated by actuator means (28, 31) along at least a first axis (B) normal to the general plane of the rims of the frame, **characterized in that** during reading, the overall force (F) delivered by the actuator means (28, 31) is caused to vary, either continuously or in steps, as a function of the position (Z) of the feeler (8) along the first axis (B) and **in that** the overall force (F) delivered by the actuator means (28, 31) comprises an axial component (Fa) parallel to the first axis (B) and a transverse component (Ft) orthogonal to the first axis (B), one and/or the other of said components (Fa, Ft) varying as a function of the position (Z) of the feeler (8) along the first axis (B), in such a manner that the axial component (Fa) of the overall force (F) is directed towards an inside of the frame (10) that is to be positioned facing the eyes of the wearer.

2. An outline reading method according to the preceding claim, in which the actuator means (28, 31) present an axis of rotation (B) about which the feeler (8) turns to enable it to slide along the complete outline of the rim, said axis of rotation (B) of the feeler (8) coinciding with the first axis (B).

3. An outline reading method according to any one of the preceding claims, in which both the axial component (F) and the transverse component (Ft) of the overall force (F) vary continuously or in steps so that their resultant varies in direction.

4. An outline reading method according to any one of the preceding claims, in which the value of the position (Z) of the feeler (8) along the first axis (B) increases with the feeler (8) going towards the inside of the frame (10), the value of the axial component (Fa) of the overall force (F) growing continuously or in steps while the value of the position (Z) of the feeler (8) increases.

5. An outline reading method according to any one of the preceding claims, in which, for the feeler (8) presenting an angular position (T) about the axis of rotation (B), the overall force (F) varies continuously or in steps as a function of the angular position (T) of the feeler (8).

6. An outline reading method according to the preceding claim, in which one and/or the other of the axial and transverse components (Fa, Ft) of the overall force (F) vary(ies) continuously or in steps as a function of the angular position (T) of the feeler (8).

7. An outline reading method according to any one of claims 5 and 6, in which, for said axis of rotation (B) not being vertical, the transverse component (Ft) of the overall force (F) varies continuously or in steps as a function of the angular position (T) of the feeler (8).

**Patentansprüche**

1. Leseverfahren für die Kontur des Frontrings (10A) einer Brillenfassung (10), das die Etappen der Berührung eines Tasters (8) mit dem Frontring (10A) und des Abtastens des Frontrings (10A) durch Gleiten oder Rollen des Tasters (8) entlang dem Frontring (10A) umfasst, wobei der Taster (8) durch Betätigungsmittel (28, 31) mindestens entlang einer ersten normalen Achse (B) in Bezug auf die allgemeine Ebene der Brillenfassung betätigt wird, **dadurch gekennzeichnet, dass** man während des Ablesens die von den Betätigungsmitteln (28, 31) gelieferte allgemeine Kraft (F) kontinuierlich oder stufenweise entsprechend der Position (Z) des Tasters (8) entlang der ersten Achse (B) variieren lässt, indem die von den Betätigungsmitteln (28, 31) gelieferte allgemeine Kraft (F) eine axiale, zur ersten Achse (B) parallele Komponente (Fa) und eine transversale, zur ersten Achse (B) orthogonale Komponente (Ft) umfasst, wobei eine und/oder die andere der beiden Komponenten (Fa, Ft) entsprechend der Position (Z) des Tasters (8) entlang der ersten Achse (B) derart variiert, dass die axiale Komponente (Fa) der allgemeinen Kraft (F) Richtung Innenseite der Fassung (10) gelenkt wird, die dazu bestimmt ist, gegenüber den Augen des Brillenträgers positioniert zu werden.

2. Leseverfahren einer Kontur nach dem vorausgehenden Anspruch, bei dem die Rotationsachse (B) der Betätigungsmittel (28, 31), um die sich der Taster (8) für sein Gleiten entlang der kompletten Kontur des Kreises dreht, mit der ersten Achse (B) deckt.

3. Leseverfahren einer Kontur nach einem der vorausgehenden Ansprüche, bei dem die axiale Komponente (Fa) und die transversale Komponente (Ft) der allgemeinen Kraft (F) beide kontinuierlich oder stufenweise variieren, sodass deren Resultierende richtungsmäßig variiert.

4. Leseverfahren einer Kontur nach einem der vorausgehenden Ansprüche, bei dem der Wert der Position (Z) des Tasters (8) auf der ersten Achse (B) zunimmt, wenn sich der Taster (8) Richtung Innenseite der Brillenfassung (10) bewegt, der Wert der axialen Komponente (Fa) der allgemeinen Kraft (F) kontinuierlich oder stufenweise steigt, wenn der Wert der Position (Z) des Tasters (8) zunimmt.

**5.** Leseverfahren einer Kontur nach einem der vorausgehenden Ansprüche, bei dem der Taster (8) eine Winkelposition (T) um die Rotationsachse (B) hat und die allgemeine Kraft (F) kontinuierlich oder stufenweise entsprechend der Winkelposition (T) des Tasters (8) variiert.

**6.** Leseverfahren einer Kontur nach dem vorausgehenden Anspruch, bei dem die eine und/oder die andere der beiden axialen (Fa) und transversalen (Ft) Komponenten der allgemeinen Kraft (F) kontinuierlich oder stufenweise entsprechend der Winkelposition (T) des Tasters (8) variieren.

**7.** Leseverfahren einer Kontur nach einem der Ansprüche 5 und 6, bei dem die Rotationsachse (B) nicht vertikal ist und die transversale (Ft) Komponente der globalen Kraft (F) kontinuierlich oder stufenweise entsprechend der Winkelposition (T) des Tasters (8) variiert.

Fig.1

Fig.2

EP 1 919 663 B1

Fig.3

Fig.4

Fig.5

Fig.6B

10

U

10A

10

U

10A

Fig.6A

**RÉFÉRENCES CITÉES DANS LA DESCRIPTION**

**Documents brevets cités dans la description**

- US 6325700 B1

- US 6325700 B